# EUROPÄISCHE PATENTSCHRIFT

(11) **EP 0 517 774 B1**
(45) Veröffentlichungstag und Bekanntmachung des Hinweises auf die Patenterteilung: **28.09.1994**
(21) Anmeldenummer: 91905295.1
(22) Anmeldetag: 28.02.1991
(51) Int. Cl.: G01M 15/00, G01L 23/08

(54) **VERFAHREN UND VORRICHTUNG ZUR ERMITTLUNG DES VERLAUFS DES INNENDRUCKES EINES ZYLINDERS EINER KOLBENMASCHINE**
PROCESS AND DEVICE FOR MEASURING THE VARIATION IN INTERNAL PRESSURE IN THE CYLINDER OF A PISTON ENGINE
PROCEDE ET DISPOSITIF DE DETECTION DE L'ALLURE DE LA PRESSION INTERNE D'UN CYLINDRE DANS UN MOTEUR A PISTON

(30) Priorität: 28.02.1990 DE 4006273
(43) Veröffentlichungstag der Anmeldung: 16.12.1992
(73) Patentinhaber: FORSCHUNGSINSTITUT FÜR KRAFTFAHRWESEN UND FAHRZEUGMOTOREN STUTTGART, D-70569 Stuttgart (DE)
(72) Erfinder: MAHR, Bernd, D-7305 Altbach (DE)
(74) Vertreter: Feldkamp, Rainer, Dipl.-Ing.
(86) Internationale Anmeldenummer: EP9100369
(87) Internationale Veröffentlichungsnummer: WO9113333

(56) Entgegenhaltungen:
- US-A- 4 109 518
- Patent Abstracts of Japan, Band 8, Nr. 275 (P-321)(1712), 15. Dezember 1984 & JP-A-59142430

## Beschreibung

Die Erfindung bezieht sich auf ein Verfahren zur Ermittlung des Verlaufs eines sich ändernden Innendruckes eines Zylinders einer Kolbenmaschine, insbesondere einer Verbrennungskraftmaschine der Kolbenbauart, sowie auf eine Vorrichtung zur Durchführung des Verfahrens.

Bei der Überprüfung und Einstellung von Kolbenmaschinen, insbesondere von Verbrennungskraftmaschinen der Kolbenbauart, ist die Kenntnis des zeitlichen Verlaufs des Innendruckes über eine Kurbelwellenumdrehung von wesentlicher Bedeutung, und zwar sowohl bei der Entwicklung von derartigen Kolbenmaschinen als auch bei deren laufender Überprüfung und/oder Steuerung.

Zur Ermittlung dieses Verlaufs des Innendruckes waren bisher im allgemeinen im Innenraum des Zylinders angeordnete Meßfühler erforderlich, was eine aufwendige Lösung darstellt, da diese Meßfühler dem vollen Verbrennungsdruck und der vollen Verbrennungstemperatur ausgesetzt sind. Die Kosten derartiger Meßfühler wären in einer Serienproduktion zu hoch, so daß fest im Innenraum des Zylinders angeordnete Meßfühler nur in Spezialfällen Anwendung finden.

Aus der US-A-4 109 518 ist es weiterhin bekannt, eine mit dem Innendruck beaufschlagte Einspritzdüse mit Hilfe von Halterungsmitteln zu befestigen, in die eine Kraftmeßzelle eingefügt ist. Das von der Kraftmeßzelle gelieferte Kraftsignal ist hierbei im wesentlichen proportional zu dem Innendruck, doch kann diese Lösung nur bei bestimmten Bau- und Befestigungsarten der Einspritzdüsen verwendet werden und es ist erforderlich, für jeden Zylinder der Verbrennungskraftmaschine eine fest eingebaute Kraftmeßzelle zu verwenden, was erhebliche Kosten verursacht.

Messungen des zeitlichen Verlaufs des Innendruckes stellen jedoch bei der Einstellung und Prüfung bzw. Wartung von Verbrennungskraftmaschinen als auch im laufenden Betrieb von Verbrennungskraftmaschinen mit elektronischer Steuerung eine wertvolle Information dar, die bisher in vielen Fällen aufgrund der hohen Kosten nicht vorliegt.

Der Erfindung liegt die Aufgabe zugrunde, ein Verfahren sowie eine Vorrichtung der eingangs genannten Art zu schaffen, die bei einfachem Aufbau und geringen Kosten eine Ermittlung des Verlaufs des sich ändernden Innendruckes eines Zylinders einer Kolbenmaschine im interessanten Zeitbereich der Verbrennung ermöglicht.

Diese Aufgabe wird durch die in den Patenansprüchen 1 bzw. 12 angegebenen Merkmale gelöst.

Vorteilhafte Ausgestaltungen und Weiterbildungen der Erfindung ergeben sich aus den Unteransprüchen.

Durch die erfindungsgemäße Ausgestaltung des Verfahrens bzw. der Vorrichtung ist eine leichte Ermittlung des Verlaufs des sich ändernden Innendruckes im laufenden Betrieb der Kolbenmaschine möglich, da lediglich einmalig die Übertragungsfunktion zwischen dem Innendruck und dem Beschleunigungs-, Geschwindigkeits- oder Wegsignal ermittelt werden muß und diese Übertragungsfunktion dann in Verbindung mit dem Beschleunigungs-, Geschwindigkeits- oder Wegsignal nachfolgend zur laufenden Ermittlung des Verlaufs des Innendruckes im Kurbelwinkelbereich der Verbrennung verwendet werden kann.

Insbesondere bei Serien-Kolbenmaschinen kann davon ausgegangen werden, daß diese Übertragungsfunktion für alle Kolbenmaschinen einer Baureihe in guter Näherung gleich ist, so daß sie lediglich einmal an einer Kolbenmaschine der Serie ermittelt werden muß.

Im laufenden Betrieb, bei der Einstellung, bei der Wartung und bei der Steuerung dieser Kolbenmaschinen reicht es dann aus, auf der Außenseite des Zylinders das Beschleunigungs-, Geschwindigkeits- oder Wegsignal mit Hilfe von Meßfühlern zu erfassen, die entweder berührungslos oder in direkter Berührung mit dem Zylinder arbeiten.

Die Erfindung wird im folgenden anhand von in der Zeichnung dargestellten Ausführungsbeispielen noch näher erläutert.

In der Zeichnung zeigen:
- Fig. 1: eine Ausführungsform der Vorrichtung zur Durchführung des Verfahrens zur Ermittlung der Übertragungsfunktion;
- Fig. 2: eine Ausführungsform der Vorrichtung zur Ableitung des den Innendruck darstellenden Signals aus den Beschleunigungs-, Geschwindigkeits- oder Weg-Meßfühlersignalen;
- Fig. 3: ein Ausführungsbeispiel zur Verdeutlichung von Ausführungsformen der Verknüpfungsschaltung nach den Fig. 1 und 2,
- Fig. 4: eine abgeänderte Ausführungsform der Vorrichtung nach Fig. 1,
- Fig. 5: eine abgeänderte Ausführungsform der Vorrichtung nach Fig. 2.

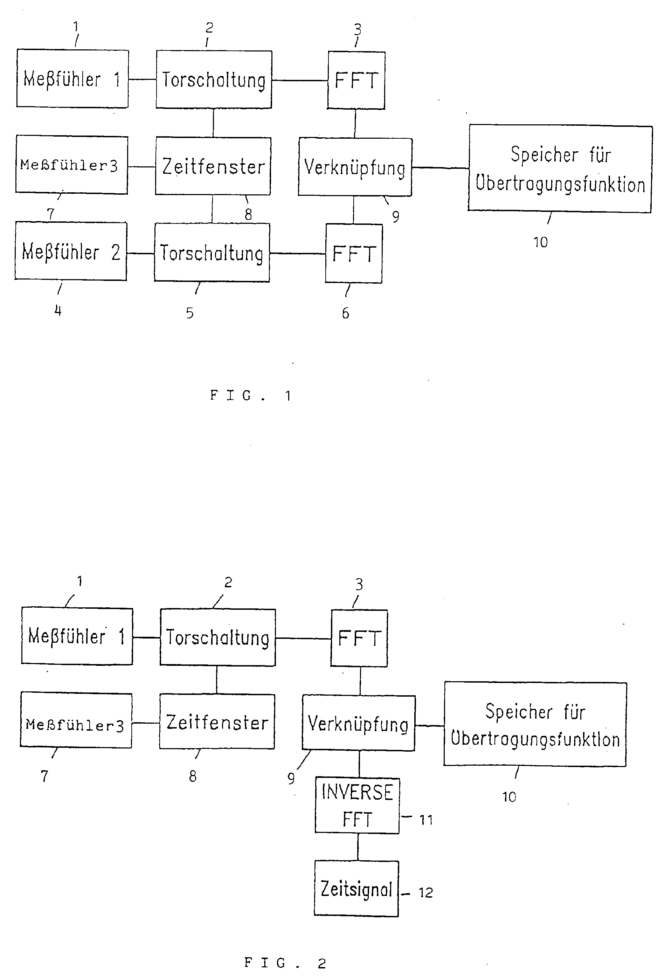

In Fig. 1 ist eine Ausführungsform der Vorrichtung dargestellt, mit deren Hilfe die Übertragungsfunktion ermittelt werden kann.

Ein Meßfühler 1, der ein Beschleunigungs-, Geschwindigkeits- oder Wegsignal an der Außenseite des Zylinders der Kolbenmaschine liefert, ist mit dem Eingang einer ersten Torschaltung 2 verbunden. Der Meßfühler 1 kann entweder ein direkt mit der Außenseite des Zylinders verbundener Meßfühler, beispielsweise ein Dehnungsmeßstreifen sein, der vorzugsweise an einer Zylinderkopfschraube befestigt ist, oder dieser Meßfühler kann beispielsweise eine Laser-Doppler-Meßvorrichtung sein, deren Laserstrahl auf einen oder aufeinanderfolgend auf mehrere Punkte der Außenseite der Kolbenmaschine, beispielsweise auf einen Motorblock oder dessen Zylinderkopf gerichtet wird, um ein Beschleunigungs-, Geschwindigkeits- oder Wegsignal dieses Punktes zu erzeugen.

In Fig. 1 ist weiterhin ein zweiter Meßfühler 4 dargestellt, der lediglich zur Ermittlung der Übertragungsfunktion erforderlich ist und eine direkte Messung des Innendruckes des Zylinders ermöglicht.

Schließlich ist noch ein dritter Meßfühler 7 vorgesehen, mit dem ein dem Grad-Kurbelwellenwinkel entsprechendes Signal aufgenommen oder berechnet werden kann. Das Ausgangssignal des zweiten Meßfühlers 4 wird ebenfalls einer Torschaltung 5 zugeführt, wobei beide Torschaltungen über eine Zeitfensterschaltung 8 in Abhängigkeit von dem Meßfühler 7 gesteuert werden, so daß lediglich ein Teil des zeitlichen Verlaufes der Ausgangssignale der Meßfühler 1 und 4 über eine volle Kurbelwellenumdrehung weitergeleitet wird. Die Ausgangssignale der Torschaltungen 2 und 5 werden jeweiligen Transformationsschaltungen 3, 6 zugeführt, die durch FFT-Transformationsschaltungen gebildet sind, die die von den Meßfühlern 1, 4 gelieferten und über die Torschaltungen 2, 5 weitergeleiteten Signale vom Zeitbereich in den Frequenzbereich transformieren. Durch die Torschaltungen 2, 5 ergibt sich damit eine Multiplikation der Meßfühler-Zeitsignale mit einer Fensterfunktion, wobei diese Fensterfunktion beispielsweise ein Rechteckfenster oder vorzugsweise ein Hanning-Fenster mit Plateau sein kann. Dadurch, daß die Steuerung der Zeitfensterschaltung 8 in Abhängigkeit von dem Kurbelwinkel erfolgt, können Störsignale in nicht interessierenden Bereichen ausgeblendet werden.

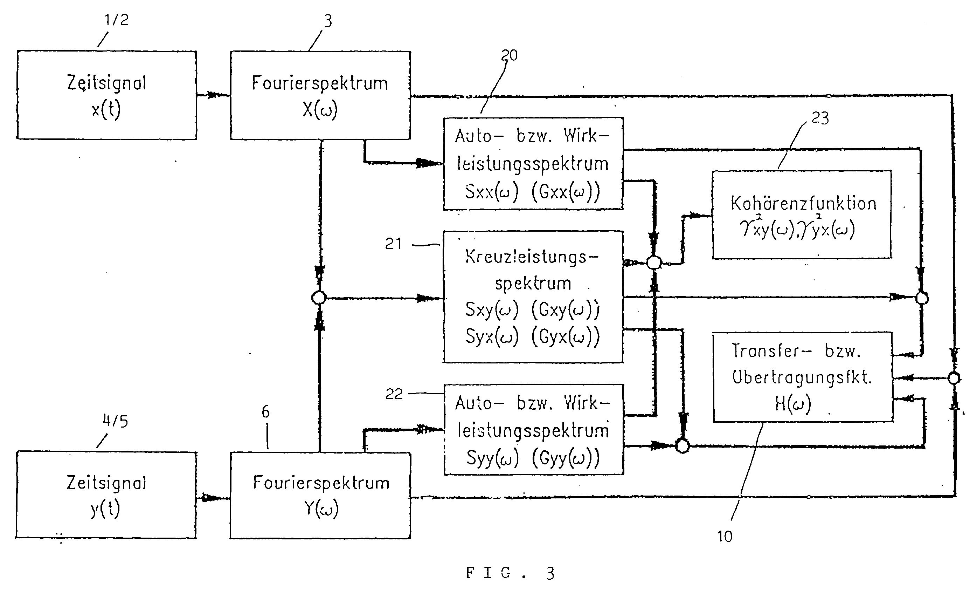

Die Ausgangssignale der Transformationsschaltungen 3, 6 werden einer anhand der Fig. 3 noch näher erläuterten Verknüpfungsschaltung 9 zugeführt, deren Ausgangssignal die Übertragungsfunktion bildet, die dann in einem Speicher 10 für eine spätere Verwendung gespeichert wird.

Wie dies eingangs erwähnt wurde, muß diese Übertragungsfunktion lediglich einmal ermittelt werden, da sie für eine bestimmte Art von Kolbenmaschine und eine bestimmte Anordnung des Meßfühlers 1 ausreichend konstant bleibt. Gegebenenfalls können für verschiedene Betriebspunkte spezielle Übertragungsfunktionen ermittelt und gespeichert werden.

Weiterhin ist es beispielsweise bei Serienmotoren ausreichend, die Übertragungsfunktion lediglich für eine einzige Kolbenmaschine zu ermitteln, worauf diese Übertragungsfunktion dann in der Regel für alle Kolbenmaschinen der gleichen Serie Verwendung finden kann.

Die Verwendung eines Meßfühlers 4 für den Innendruck selbst ist damit lediglich bei der Ermittlung der Übertragungsfunktion erforderlich.

Dies ist insbesondere aus Fig. 2 zu erkennen, in der eine Ausführungsform der Vorrichtung zur Ermittlung eines den Innendruck darstellenden Signals dargestellt ist. Auch in diesem Fall wird wiederum der gleiche Meßfühler 1 mit nachgeschalteter Torschaltung 2 und Transformationsschaltung 3 verwendet, wie in Fig. 1. In gleicher Weise wird eine durch einen Meßfühler 7 gesteuerte Zeitfensterschaltung 8 verwendet, die die Torschaltung 2 steuert und den Kurbelwinkelbereich auswählt. Das Ausgangssignal der Transformationsschaltung wird einer Verknüpfungsschaltung zugeführt, in der dieses Ausgangssignal mit der in dem Speicher 10 gespeicherten Übertragungsfunktion verknüpft wird. Das Ausgangssignal der Verknüpfungsschaltung 9 ist ein im Frequenzbereich liegendes Signal, das dann einer dritten Transformationsschaltung 11 zugeführt wird, die eine zur Transformationsschaltung 3 inverse Funktion aufweist und das Signal in den Zeitbereich zurücktransformiert und damit ein Ausgangssignal liefert, das den Verlauf des Innendrucks 12 darstellt.

In Fig. 3 ist eine Ausführungsform der in den Fig. 1 und 2 verwendeten Verknüpfungsschaltungen 9 gezeigt. Wie aus der Fig. 3 zu erkennen ist, wird das von dem Meßfühler 1 und der Torschaltung 2 gelieferte Zeitsignal x(t) für die Beschleunigung oder die Geschwindigkeit oder den Weg eines Punktes auf der Außenseite des Zylinders in der Transformationsschaltung 3 in ein Fourierspektrum X(ω) umgewandelt, während das von dem Meßfühler 4 für den Innendruck gelieferte und von der Torschaltung 5 weitergeleitete Zeitsignal des Innendruckes y(t) der Transformationsschaltung 6 zugeführt wird, in der ein Fourierspektrum Y(ω) hiervon erzeugt wird.

Für die Verknüpfung der im Frequenzbereich liegenden Signale X(ω) und Y(ω) ergeben sich dann prinzipiell drei Möglichkeiten:
1. Aus den Signalen X(ω und Y(ω) wird das Kreuzleistungsspektrum S_{xy} (ω) in der Kreuzleistungsspektrum-Schaltung 21 erzeugt. Gleichzeitig wird das Autoleistungspektrum Sₓₓ (ω) von X(ω) in der Autoleistungsspektrum-Schaltung 20 erzeugt. Aus dem Kreuzleistungsspektrum und dem Autoleistungsspektrum wird dann die Übertragungsfunktion H(ω) berechnet.
2. Eine weitere Möglichkeit besteht darin, das Kreuzleistungsspektrum S_{yx} (ω) und das Autoleistungsspektrum S_{yy} (ω) von Y(ω) in der Autoleistungsspektrum-Schaltung 22 zu berechnen, woraus aus diesen Werten wiederum die Übertragungsfunktion H(ω) berechnet wird.
3. Eine weitere Möglichkeit besteht darin, die Übertragungsfunktion direkt aus den Fourierspektren X(ω) und Y(ω) zu berechnen. Dieser Weg ist nur dann sinnvoll, wenn eine sehr gute Kohärenz vorliegt, d.h. daß diese Kohärenz im Idealfall 1 beträgt.

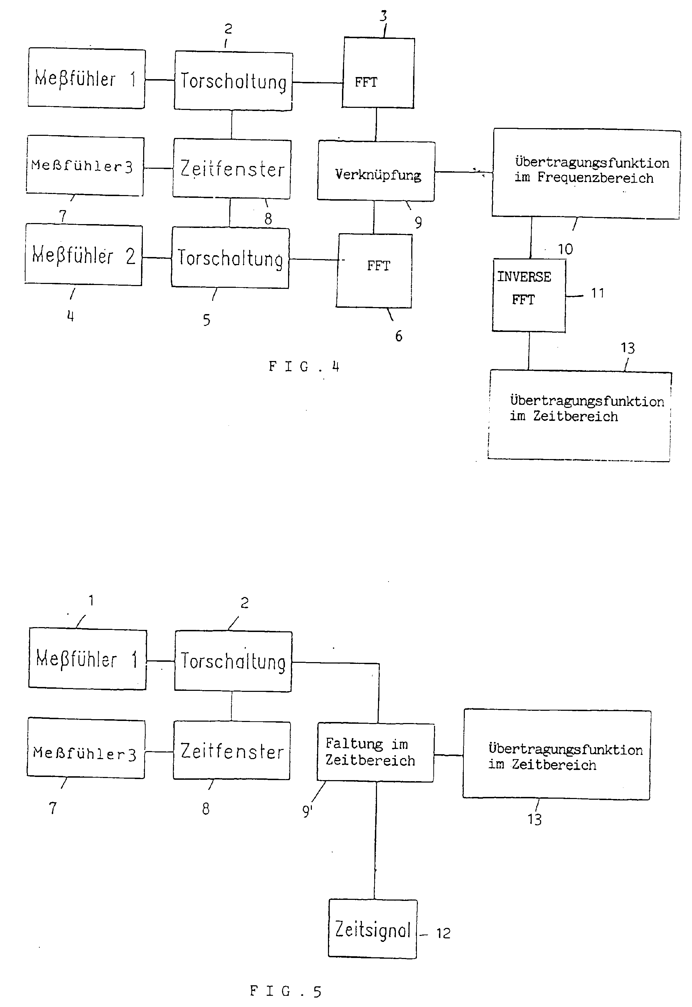

In den Figuren 4 und 5 ist eine weitere Ausführungsform einer Vorrichtung zur Durchführung des Verfahrens zur Ermittlung der Übertragungsfunktion bzw. zur Ableitung des den Innendruck darstellenden Signals aus dem Beschleunigungs-Geschwindigkeits- oder Weg-Meßfühlersignalen gezeigt.

Die Schaltung nach Fig. 4 entspricht im wesentlichen der Schaltung nach Fig. 1, wobei jedoch die in dem Speicher 10 gespeicherte Übertragungsfunktion über eine Schaltung 11 zur inversen Fouriertranformation in den Zeitbereich transformiert und in dem Speicher 13 gespeichert wird, wobei die im Speicher 13 gespeicherte Übertragungsfunktion im Zeitbereich die Impulsantwort darstellt.

In entsprechender Weise kann dann bei der Schaltung nach Fig. 5, die der Schaltung nach Fig. 2 ähnelt, die Fouriertransformationsschaltung 3 fortgelassen werden und das Ausgangssignal der Torschaltung 2 in der Schaltung 9′ direkt einer Faltung mit der in dem Speicher 13 gespeicherten Übertragungsfunktion im Zeitbereich (Impulsantwort) unterworfen werden, um das den Verlauf des Innendruckes der Brennkraftmaschine darstellende Signal zu erzeugen.

Die gesamten Schaltungen nach den Fig. 1 - 5, die zur Auswertung der Meßfühlersignale dienen, können in Form integrierter Schaltungen und in einfachen Rechenschaltungen und Speicherschaltungen verwirklicht werden, so daß der Aufwand relativ gering ist.

Dadurch, daß im laufenden Betrieb lediglich ein mit der Außenseite des Zylinders zusammenwirkender Meßfühler erforderlich ist, ergibt sich eine einfache Anordnung, die sowohl für Einstell- als auch Wartungsarbeiten an Kolbenmaschinen Verwendung finden kann, wobei weiterhin auch eine dauernde Verwendung der Schaltung nach Fig. 2 zur Kontrolle und Steuerung derartiger Kolbenmaschinen möglich ist, da auf diese Weise beispielsweise der Verbrennungsverlauf einer Kolbenmaschine in optimaler Weise eingestellt werden kann.

Mit dem beschriebenen robusten und preiswerten System können im laufenden Betrieb z.B. folgende Kontrollen und Optimierungen von Kolbenmaschinen vorgenommen werden:
- Anpassung des Spritzbeginns eines Dieselmotors an die jeweilige Cetanzahl des Kraftstoffs und an die im Brennraum herrschenden Temperaturverhältnisse,
- Überwachung eines Mehrzylindermotors bezüglich einwandfreier Funktion aller Zylinder.

## Patentansprüche

1. Verfahren zur Ermittlung des Verlaufs eines sich ändernden Innendruckes eines Zylinders einer Kolbenmaschine, insbesondere einer Verbrennungsmaschine der Kolbenbauart,
dadurch **gekennzeichnet,** daß mit Hilfe von ersten Meßfühlern (1) ein Beschleunigungs-, Geschwindigkeits- oder Wegsignal (x(t)) erzeugt wird, wobei die ersten Meßfühler derart mit der Außenseite des Zylinders in Wechselwirkung stehen, daß das von ihnen erzeugte Signal (x(t)) die Beschleunigung, die Geschwindigkeit oder den Weg eines oder mehrerer Punkte(s) an der Außenseite des Zylinders darstellt, daß weiterhin einmalig eine Übertragungsfunktion (H(ω)) ermittelt wird, die die Beziehung des Beschleunigungs-, Geschwindigkeits- oder Wegsignals (x(t)) zum Innendruck repräsentiert, und daß nachfolgend lediglich aus dem Beschleunigungs-, Geschwindigkeits- oder Wegsignal (x(t)) und der Übertragungsfunktion (H(ω)) ein den Innendruck darstellendes Ausgangssignal abgeleitet wird.

2. Verfahren nach Anspruch 1,
dadurch **gekennzeichnet,** daß zur Ermittlung der Übertragungsfunktion (H(ω)) das Beschleunigungs-, Geschwindigkeits- oder Wegsignal (x(t)) und ein durch direkte Messung des Innendrucks mit Hilfe eines zweiten Meßfühlers (4) ermitteltes Innendrucksignal (y(t)) als Zeitsignale gewonnen und vom Zeitbereich in den Frequenzbereich transformiert werden.

3. Verfahren nach Anspruch 2,
dadurch **gekennzeichnet**, daß das Kreuzleistungsspektrum (S_{xy}(ω)) der in den Frequenzbereich transformierten Signale (x(ω),y(ω)) und das Autoleistungsspektrum (Sₓₓ(ω)) des durch Transformation des Beschleunigungs-, Geschwindigkeits- oder Wegsignals (x(t)) in den Frequenzbereich gewonnenen Signals (x(ω)) und hieraus die Übertragungsfunktion (H(ω)) berechnet wird.

4. Verfahren nach Anspruch 2,
dadurch **gekennzeichnet,** daß das Kreuzleistungsspektrum (S_{yx}((ω) der in den Frequenzbereich transformierten Signale (x(ω),y(ω)) und das Autoleistungsspektrum (S_{yy}(ω)) des durch Transformation des Innendrucksignals (y(t)) in den Frequenzbereich gewonnenen Signals (y(ω)) und hieraus die Übertragungsfunktion (H(ω)) berechnet wird.

5. Verfahren nach Anspruch 2,
dadurch **gekennzeichnet,** daß die Übertragungsfunktion (H(ω)) bei Vorliegen ausreichender Kohärenz direkt aus den in den Frequenzbereich transformierten Signalen (x(ω), y(ω)) berechnet wird.

6. Verfahren nach einem der vorhergehenden Ansprüche,
dadurch **gekennzeichnet,** daß das die Beschleunigung, die Geschwindigkeit oder den Weg darstellende Zeitsignal (x(t)) und das den Innendruck darstellende Zeitsignal (y(t)) vor der Transformation in den Frequenzbereich mit einer zeitlichen Fensterfunktion multipliziert werden, so daß lediglich ein Teil des zeitlichen Verlaufs der Zeitsignale (x(t),y(t)) einer vollen Kurbelwellenumdrehung weitergeleitet wird.

7. Verfahren nach einem der vorhergehenden Ansprüche,
dadurch **gekennzeichnet,** daß zur Ableitung des den Innnendruck darstellenden Ausgangssignals das die Beschleunigung, die Geschwindigkeit oder den Weg darstellende Zeitsignal (x(t)) in den Frequenzbereich transformiert, mit der Übertragungsfunktion verknüpft und in den Zeitbereich zurücktransformiert wird.

8. Verfahren nach einem der Ansprüche 1 bis 6,
dadurch **gekennzeichnet,** daß eine weitere, als Impulsantwort bezeichnete Übertragungsfunktion durch eine inverse Fouriertransformation der Übertragungsfunktion (H(ω)) berechnet wird.

9. Verfahren nach Anspruch 8,
dadurch **gekennzeichnet,** daß zur Ableitung des den Innendruck darstellenden Ausgangssignals das die Beschleunigung, die Geschwindigkeit oder den Weg darstellende Zeitsignal (x(t)) durch eine Faltung im Zeitbereich mit der die Impulsantwort darstellenden Übertragungsfunktion im Zeitbereich verknüpft wird, um ein den Innendruck darstellendes Ausgangssignal zu erzeugen.

10. Verfahren nach einem der vorhergehenden Ansprüche,
dadurch **gekennzeichnet,** daß das die Beschleunigung, die Geschwindigkeit oder den Weg darstellende Zeitsignal (x(t)) am Zylinderkopf oder Motorblock der Kolbenmaschine mit Hilfe von Dehnungsmeßstreifen gewonnen wird, die an Zylinderkopfschrauben befestigt sind.

11. Verfahren nach einem der Ansprüche 1 - 10,
dadurch **gekennzeichnet,** daß das die Beschleunigung, die Geschwindigkeit oder den Weg darstellende Zeitsignal (x(t)) berührungslos mit Hilfe von auf bestimmte Punkte der Kolbenmaschine gerichteten Laserstrahlen nach dem Doppler-Effekt gemessen wird.

12. Vorrichtung zur Durchführung des Verfahrens nach einem der Ansprüche 1 - 11, mit ersten Meßfühlern (1), die derart mit der Außenseite des Zylinders einer Kolbenmaschine, insbesondere einer Verbrennungsmaschine in Wechselwirkung stehen, daß ein von ihnen erzeugtes Beschleunigungs-, Geschwindigkeits- oder Wegsignal (x(t)) die Beschleunigung, die Geschwindigkeit oder den Weg eines oder mehrerer Punkte(s) an der Außenseite des Zylinders darstellt, mit einem zweiten Meßfühler (4) zur Gewinnung eines Innendrucksignals (y(t)) durch direkte Messung des Innendrucks, und mit einer ersten und einer zweiten Transformationsschaltung (3,6) zur Transformation des Beschleunigungs-, Geschwindigkeits- oder Wegsignals (x(t)) und des Innendrucksignals (y(t)) vom Zeitbereich in den Frequenzbereich, einer Verknüpfufungsschaltung (9) zur Ermittlung der Übertragungsfunktion (H(ω) aus den Ausgangssignalen der Transformationsschaltungen (3,6) und einem Speicher (10) zur Speicherung der Übertragungsfunktion (H(ω)).

13. Vorrichtung nach Anspruch 12,
dadurch **gekennzeichnet,** daß das Ausgangssignal der Meßfühler (1,4) für das Beschleunigungs-, Geschwindigkeits- oder Wegsignal (x(t)) und das Innendrucksignal (y(t)) dem Eingang der Transformationsschaltungen (3,6) über jeweilige Torschaltungen (2,5) zugeführt sind, die über ein von einem dritten Meßfühler (7) zur Bestimmung der Kurbelwinkelzuordnung gesteuertes Zeitfenster (8) steuerbar sind.

14. Vorrichtung nach Anspruch 12 oder 13,
**gekennzeichnet** durch eine dritte Transformationsschaltung (11) zur Rücktransformation eines durch Verknüpfung des durch Transformation des Beschleunigungs-, Geschwindigkeits- oder Wegsignals (x(t)) in den Frequenzbereich gewonnenen Signals (x(ω)) einerseits mit der im Speicher (10) gespeicherten Übertragungsfunktion (H(ω)) andererseits ermittelten Signals in den Zeitbereich, wobei das Ausgangssignal der dritten Transformationsschaltung (11) das den Verlauf des Innendrucks darstellende Ausgangssignal bildet.

15. Vorrichtung nach Anspruch 12 oder 13,
dadurch **gekennzeichnet,** daß eine inverse Fouriertransformationsschaltung (11) zur Tranformation der Übertragungsfunktion im Frequenzbereich in den Zeitbereich mit dem Ausgang des Speichers (10) verbunden ist, und daß ein weiterer Speicher (13) zur Speicherung dieser die Impulsantwort darstellenden Übertragungsfunktion im Zeitbereich mit dem Ausgang der inversen Fouriertransformationsschaltung (11) verbunden ist.

16. Vorrichtung nach Anspruch 15,
**gekennzeichnet** durch eine Faltungsschaltung (9′) zur Verknüpfung des Beschleunigungs-, Geschwindigkeits- oder Wegsignals (x(t)) mit der im weiteren Speicher (13) gespeicherten, die Impulsantwort darstellenden Übertragungsfunktion, wobei das Ausgangssignal der Faltungsschaltung (9′) das den Verlauf des Innendrucks darstellende Ausgangssignal bildet.

17. Vorrichtung nach einem der Ansprüche 12 - 16,
dadurch **gekennzeichnet,** daß ein Dehnungsmeßstreifen vorgesehen ist, der an den Zylinderkopfschrauben der Kolbenmaschine befestigt ist und das Beschleunigungs-, Geschwindigkeits- oder Wegsignal (x(t)) liefert.

18. Vorrichtung nach einem der Ansprüche 12 - 16,
dadurch **gekennzeichnet,** daß ein Laser-Doppler-Meßgerät zur Messung des Beschleunigungs-, Geschwindigkeits- oder Wegsignals (x(t)) an vorgegebenen Punkten der Kolbenmaschine vorgesehen ist.

## Claims

1. A method of determining the course of a varying internal pressure in a cylinder of a piston engine, in particular a combustion engine of the piston type,
characterized by the fact that, by means of first sensors (1) an acceleration, velocity or displacement signal (x(t)) is produced, the first sensors being in such interaction with the outside of the cylinder that the signal (x(t)) produced thereby represents the acceleration, the velocity or the displacement of one or more points on the outside of the cylinder; that furthermore a transfer function (H(ω)) which represents the relationship of the acceleration, velocity or displacement signal (x(t)) to the internal pressure is determined once, and that thereupon an output signal representing the internal pressure is derived merely from the acceleration, velocity or displacement signal (x(t)) and the transfer function (H(ω).

2. A method according to claim 1,
characterized by the fact that for the determination of the transfer function (H(ω)) the acceleration, velocity or displacement signal (x(t)) and an internal pressure signal (y(t)) determined by direct measurement of the internal pressure by means of a second sensor (4) are obtained as time signals and are transformed from the time domain into the frequency domain.

3. A method according to claim 2,
characterized by the fact that the cross power spectrum (S_{xy}(ω)) of the signals (x(ω),y(ω)) transformed into the frequency domain and the auto power spectrum (Sₓₓ(ω)) of the signal (x(ω)) obtained by transformation of the acceleration, velocity or displacement signal (x(t)) into the frequency domain and from this the transfer function (H(ω)) are calculated.

4. A method according to claim 2,
characterized by the fact that the cross power spectrum (S_{yx}(ω)) of the signals (x(ω),y(ω)) transformed into the frequency domain and the auto power spectrum (S_{yy}(ω)) of the signal (y(ω)) obtained by transformation of the internal pressure signal (y(t)) into the frequency domain and from this the transfer function (H(ω)) are calculated.

5. A method according to claim 2,
characterized by the fact that in the case of sufficient coherence the transfer function (H(ω)) is calculated directly from the signals (x(ω),y(ω)) transformed into the frequency domain.

6. A method according to any of the preceding claims,
characterized by the fact that the time signal (x(t)) representing the acceleration, the velocity or the displacement and the time signal (y(t)) representing the internal pressure are multiplied by a time window function before the transformation into the frequency domain so that only a part of the variation with time of the time signals (x(t),y(t)) of a full revolution of the crank shaft is forwarded.

7. A method according to any of the preceding claims,
characterized by the fact that for the derivation of the output signal which represents the internal pressure, the time signal (x(t)) which represents the acceleration, the velocity or the displacement is transformed into the frequency domain, combined with the transfer function and transformed back into the time domain.

8. A method according to any of claims 1 to 6,
characterized by the fact that a further transfer function referred to as pulse response is calculated by an inverse Fourier transformation of the transfer function (H(ω)).

9. A method according to claim 8,
characterized by the fact that for the derivation of the output signal which represents the internal pressure, the time signal (x(t)) which represents the acceleration, the velocity or the displacement is combined by a convolution in the time domain with the transfer function representing the pulse response in the time domain so as to produce an output signal which represents the internal pressure.

10. A method according to any of the preceding claims,
characterized by the fact that the time signal (x(t)) which represents the acceleration, the velocity or the displacement is obtained on the cylinder head or engine block of the piston engine by means of strain gauges which are fastened on cylinder-head bolts.

11. A method according to any of claims 1 to 10,
characterized by the fact that the time signal (x(t)) which represents the acceleration, the velocity or the displacement is measured in accordance with the Doppler effect by means of laser beams directed at given points of the piston engine.

12. An apparatus for carrying out the method according to any of claims 1 to 11, comprising : first sensors (1) which are so in interaction with the outside of the cylinder of a piston engine, particularly a combustion engine, that an acceleration, velocity or displacement signal (x(t)) produced by them represents the acceleration, the velocity or the displacement of one or more points on the outside of the cylinder; a second sensor (4) for obtaining an internal pressure signal (y(t)) by direct measurement of the internal pressure; first and second transformation circuits (3, 6) for transforming the acceleration, velocity or displacement signal (x(t)) and the internal pressure signal (y(t)) from the time domain into the frequency domain; a combining circuit (9) for determining the transfer function (H(ω) from the output signals of the transformation circuits (3, 6); and a memory (10) for storing the transfer function (H(ω)).

13. An apparatus according to claim 12,
characterized by the fact that the output signal of the sensors (1, 4) for the acceleration, velocity or displacement signal (x(t)) and the internal pressure signal (y(t)) are fed to the input of the transformation circuits (3, 6) via respective gate circuits (2, 5) which are controllable via a time window (8) which is controlled by a third sensor (7) for the determination of the respective crank angle of interest.

14. An apparatus according to claim 12 of 13,
characterized by a third transformation circuit (11) for the retransformation of a signal established by combination of the signal (x(ω)) obtained by transformation of the acceleration, velocity or displacement signal (x(t)) into the frequency domain on the one hand with the transfer function (H(ω)) stored in the memory (10) on the other hand, into the time domain, the output signal of the third transformation circuit (11) forming the output signal which represents the variation with time of the internal pressure.

15. An apparatus according to claim 12 or 13,
characterized by the fact an inverse Fourier transformation circuit (11) for transformation of the transfer function in the frequency domain into the time domain is connected to the output of the memory (10), and that a further memory (13) for the storing of this transfer function which represents the pulse response in the time domain is connected to the output of the inverse Fourier transformation circuit (11).

16. An apparatus according to claim 15,
characterized by a convolution circuit (9′) for combining the acceleration, velocity of displacement signal (x(t)) with the transfer function which represents the pulse response and is stored in the further memory (13), the output signal of the convolution circuit (9′) forming the output signal representing the variation with time of the internal pressure.

17. An apparatus according to any of claim 12 to 16,
characterized by the fact that a strain gauge is provided which is fastened to the cylinder head bolts of the piston engine and provides the acceleration, velocity or displacement signal (x(t)),

18. An apparatus according to any of claims 12 to 16,
characterized by the fact that a laser Doppler measuring device is provided at predetermined points of the piston engine for measuring the acceleration, velocity or displacement signal (x(t)).

## Revendications

1. Procédé pour déterminer les variations de la pression interne d'un cylindre d'un moteur à piston, notamment d'un moteur à combustion interne du type à piston, caractérisé en ce qu'à l'aide d'un premier capteur (1) est déterminé un signal d'accélération, de vitesse ou de parcours (x(t)), le premier capteur étant en interaction avec le côté externe du cylindre de manière que le signal (x(t)) produit par lui représente l'accélération, la vitesse ou le parcours d'un ou plusieurs points sur le côté externe du cylindre, en ce qu'en outre une fonction de transfert (H(ω)) est déterminée une seule fois et représente le rapport entre le signal d'accélération, de vitesse ou de parcours (x(t)) et la pression interne,et en ce qu'ensuite est dérivé un unique signal de sortie représentant la pression interne à partir du signal d'accélération, de vitesse ou de parcours (x(t)) et de la fonction de transfert (H(ω)).

2. Procédé selon la revendication 1, caractérisé en ce que pour déterminer la fonction de transfert (H(ω)), le signal d'accélération, de vitesse ou de parcours (x(t)) et un signal de pression interne (y(t)) déterminé par une mesure directe de la pression interne à l'aide d'un second capteur (4) sont obtenus en tant que signaux temporels et sont transférés du domaine temporel dans le domaine des fréquences.

3. Procédé selon la revendication 2, caractérisé en ce que sont calculés le spectre de puissance croisé (S_{xy}(ω)) des signaux (x(ω), y(ω)) transformés dans le domaine des fréquences et le spectre d'autopuissance (Sₓₓ(ω)) du signal (x(ω)) obtenu par transformation du signal d'accélération, de vitesse ou de parcours (x(t)) dans le domaine des fréquences, et la fonction de transfert (H(ω)) est calculée à partir de ces derniers.

4. Procédé selon la revendication 2, caractérisé en ce que sont calculés le spectre de puissance croisé (S_{yx}(ω)) des signaux (X(ω), Y(ω)) transformés dans le domaine des fréquences et le spectre d'autopuissance (S_{yy}(ω)) du signal (Y(ω)) obtenu par transformation du signal de pression interne (y(t)) dans le domaine des fréquences, et la fonction de transfert (H(ω)) est calculée à partir de ces derniers.

5. Procédé selon la revendication 2, caractérisé en ce que la fonction de transfert (H(ω)) est calculée directement quand est présente une cohérence suffisante à partir des signaux (X(ω), Y(ω)) transformés dans le domaine des fréquences.

6. Procédé selon l'une quelconque des revendications précédentes, caractérisé en ce que le signal temporel (x(t)) qui représente l'accélération, la vitesse ou le parcours et le signal temporel (y(t)) qui représente la pression interne sont multipliés avant transformation dans le domaine des fréquences avec une fonction de fenêtre temporelle, de manière que soit transmise seulement une partie de la variation dans le temps des signaux temporels (x(t), y(t)) d'une révolution complète du vilebrequin.

7. Procédé selon l'une quelconque des revendications précédentes, caractérisé en ce que pour dériver le signal de sortie représentant la pression interne, le signal temporel (x(t)) qui représente l'accélération, la vitesse et/ou le parcours est transformé dans le domaine des fréquences, reliés logiquement à la fonction de transfert et retransformé dans le domaine temporel.

8. Procédé selon l'une quelconque des revendications 1 à 6, caractérisé en ce qu'une autre fonction de transfert appelée réponse impulsionnelle est calculée par une transformation de Fourier inverse de la fonction de transfert (H(ω)).

9. Procédé selon la revendication 8, caractérisé en ce que pour dériver le signal de sortie représentant la pression interne, le signal temporel (x(t)) représentant l'accélération, la vitesse ou le parcours est relié logiquement par convolution dans le domaine temporel avec la fonction de transfert représentant la réponse impulsionnelle, de manière à produire un signal de sortie représentant la pression interne.

10. Procédé selon l'une quelconque des revendications précédentes, caractérisé en ce que le signal (x(t)) représentant l'accélération, la vitesse ou le parcours est obtenu sur la culasse ou le bloc-moteur du moteur à piston à l'aide de jauges de contraintes qui sont fixées à des boulons de la culasse.

11. Procédé selon l'une quelconque des revendications 1 à 10, caractérisé en ce que-le signal temporel (x(t)) représentant l'accélération, la vitesse et/ou le parcours est mesuré sans contact par effet Doppler à l'aide de rayons laser dirigés sur des points déterminés du moteur à piston.

12. Dispositif pour la mise en oeuvre du procédé selon l'une quelconque des revendications 1 à 11, comprenant des premiers capteurs (1) qui sont en interaction avec le côté externe du cylindre d'un moteur à piston, notamment d'un moteur à combustion interne, tels qu'un signal d'accélération, de vitesse ou de parcours (x(t)) produit par eux représente l'accélération, la vitesse ou le parcours d'un ou plusieurs points sur le côté externe du cylindre, un second capteur (4) pour obtenir un signal de pression interne (y(t)) par mesure directe de la pression interne, et un premier et un second circuits de transformation (3, 6) pour la transformation du signal d'accélération, de vitesse ou de parcours (x(t)) et du signal de pression interne (y(t)) du domaine temporel dans le domaine des fréquences, un circuit de liaison logique (9) pour déterminer la fonction de transfert (H(ω)) à partir des signaux de sortie des circuits de transformation (3, 6) et une mémoire (10) pour le stockage de la fonction de transfert (H(ω)).

13. Dispositif selon la revendication 12, caractérisé en ce que le signal de sortie des capteurs (1, 4) destinés au signal d'accélération, de vitesse ou de parcours (x(t)) et un signal de pression interne (y(t)) sont appliqués à l'entrée des circuits de transformation (3, 6) par des circuits porte respectifs (2, 5), qui peuvent être commandés par une fenêtre temporelle (8) commandée par un troisième capteur (7) pour déterminer la subordination de l'angle du vilebrequin.

14. Dispositif selon la revendication 12 ou 13, caractérisé par un troisième circuit de transformation (11) pour la transformation inverse d'un signal (x(ω)) par liaison logique du signal (x(t)) d'accélération, de vitesse ou de parcours obtenu par transformation dans le domaine des fréquences, d'une part avec la fonction de transfert (H(ω)) stockée dans la mémoire (10) et d'autre part avec le signal déterminé dans le domaine temporel, le signal de sortie du troisième circuit de transformation (11) formant le signal de sortie représentant la variation de la pression interne.

15. Dispositif selon la revendication 12 ou 13, caractérisé en ce qu'un circuit de transformation de Fourier inverse (11) est relié à la sortie de la mémoire (10) en vue de la transformation de la fonction de transfert du domaine des fréquences vers le domaine temporel, et en ce qu'une autre mémoire (13) destinée au stockage de cette fonction de transfert représentant la réponse impulsionnelle est reliée dans le domaine temporel à la sortie du circuit de transformation de Fourier inverse (11).

16. Dispositif selon la revendication 15, caractérisé par un circuit de convolution (9′) pour établir une liaison logique entre le signal d'accélération, de vitesse ou de parcours ( x(t)) avec la fonction de transfert stockée dans l'autre mémoire (13) et représentant la réponse impulsionnelle, le signal de sortie du circuit de convolution (9′) formant le signal de sortie représentant la variation de la pression interne.

17. Dispositif selon l'une quelconque des revendications 12 à 16, caractérisé en ce qu'il est prévu une jauge de contrainte qui est fixée sur le boulon de la culasse du moteur à piston et fournit le signal d'accélération, de vitesse ou de parcours (x(t)).

18. Dispositif selon l'une quelconque des revendications 12 à 16, caractérisé en ce qu'un appareil de mesure Doppler à laser destiné à la mesure du signal d'accélération, de vitesse ou de parcours (x(t)) est prévu en des points prédéterminés du moteur à piston.
